Europäisches Patentamt

European Patent Office

Office européen des brevets

(11) Veröffentlichungsnummer : **0 179 181**
B1

# (12) EUROPÄISCHE PATENTSCHRIFT

(45) Veröffentlichungstag der Patentschrift :
09.11.88

(51) Int. Cl.⁴ : **B 32 B 27/08**, B 32 B 27/32

(21) Anmeldenummer : **85100140.4**

(22) Anmeldetag : **08.01.85**

(54) Thermoverformbare, mehrschichtige Kunststoffolie mit Gasabdichteigenschaften.

(30) Priorität : 26.09.84 DE 3435233

(43) Veröffentlichungstag der Anmeldung :
30.04.86 Patentblatt 86/18

(45) Bekanntmachung des Hinweises auf die Patenterteilung : 09.11.88 Patentblatt 88/45

(84) Benannte Vertragsstaaten :
AT BE CH DE FR GB IT LI LU NL SE

(56) Entgegenhaltungen :
GB-A- 1 379 106
GB-A- 1 489 635

(73) Patentinhaber : N.V. Cobelplast S.A.
Antwerpse Steenweg 8-10
B-9100 Lokeren (BE)

(72) Erfinder : van Iseghem, Augustinus Emiel Marcel
Zwaanaardestraat 19a
B-9190 St-Niklaas (BE)

(74) Vertreter : Döring, Rudolf, Dr.-Ing.
Patentanwälte Dr.-Ing. R. Döring Dipl.-Phys. Dr. J.
Fricke Jasperallee 1a
D-3300 Braunschweig (DE)

**Beschreibung**

Die Erfindung betrifft eine thermoverformbare, mehrschichtige Kunststoffolie mit Gasabdichteigenschaften, bei der die Folie eine innere extrudierbare Gasabdichtschicht auf der Basis von Vinylidenchlorid oder aus einem Äthylen-Vinyl-Alkohol-Copolymer, eine beidseitig auf die Gasabdichtschicht aufgebrachte Klebstoffschicht aus einem Copolymer von Äthylen und Vinylacetat und jeweils damit verbundene Schichten aus einer Polyolefinverbindung aufweist.

Für die Verpackung von sauerstoff- und wasserdampfempfindlichen Füllgütern sind eingangs genannte thermoverformbare, mehrschichtige Kunststoffolien mit Gasabdichteigenschaften bekannt (GB-A-1 379 106). Bei dieser Kunststoffolie handelt es sich um eine koextrudierte Folie, deren innere extrudierbare Sperrschicht aus einem Copolymer von Vinylidenchlorid und Vinylchlorid besteht mit beidseitig aufgebrachten Äthylen/Vinylacetat-Copolymer-Klebstoffschichten und einer äußeren Schicht aus Polyäthylen, Polypropylen oder Äthylen/Propylen-Copolymer. Derartige Kunststoffolien sind u. a. für die Verpackung von Gütern geeignet mit einem flüchtigen Aromastoff, welcher möglichst weitgehend erhalten bleiben soll, sowie für Erzeugnisse, die unerwünschte Gerüche aus der Umgebung aufnehmen können, oder aber für Produkte, die hochflüchtige Bestandteile enthalten. Zu diesen Produkten, die vorteilhaft in derartigen Folien verpackt werden können, gehören beispielsweise Käse, Butter, verschiedene Medikamente, getrocknete Lebensmittel und ohne Kühlung haltbare Fleischwaren.

Die bekannten mehrschichtigen Folien können bei geeigneter Dicke unter Anwendung thermoplastischer Verformungstechniken zu relativ starren Kunststoffverpackungen verarbeitet werden. Bei der thermoplastischen Verformung wird das mehrschichtige Folienmaterial unter der Einwirkung von Wärme verformt, indem die Folie als Bahn von einer Rolle abgezogen, mit ihren seitlichen Kanten in geeigneten Förderern gehalten und durch eine Wärmebehandlungszone hindurchgeführt wird. Die Erwärmung kann dabei mittels eines Ofens oder durch Heizstrahler sowie auch durch Kontaktheizung erfolgen. Die so erwärmte Folie wird unmittelbar einer Thermoverformmaschine zugeleitet, in welcher die Ausformung, beispielsweise durch Vakuumverformen, Druckverformen oder ähnliche Behandlung, erfolgt, um die herzustellende Verpackung dem zu verpackenden Artikel anzupassen. In allen Fällen ist es notwendig, das Folienmaterial so weit zu erwärmen, daß es einen gewissen Erweichungsgrad erreicht, ehe die Überführung in die jeweils gewünschte Form vorgenommen werden kann.

Nachteilig für das Thermoverformen von mehrschichtigen Folien der eingangs genannten Art mit den äußeren Schichten aus einer Polyolefinverbindung wirkt sich der relativ hohe Schmelzindex dieser Polyolefinverbindung aus, der jedoch andererseits für die Koextrusion mit den hochdichten Materialien der Gasabdichtschichten obengenannter Art erforderlich ist. Dadurch, daß Polyolefine, wie z. B. Polyäthylen, Polypropylen oder Propylen-Copolymere, einen relativ scharf begrenzten Schmelzpunkt aufweisen, können derartige Folien bei Erwärmung außerhalb der Formstation auf eine für das Thermoverformen hinreichende Temperatur häufig nicht mehr die durch ihr Eigengewicht erzeugten Zugkräfte ohne merkbare Dehnung aufnehmen. Die in den Zuführketten durch die Wärmestation hindurchgeführten Folien zeigen deshalb sehr oft einen Durchhang und müssen in diesem Zustand in die Thermoverformmaschine eingeführt werden. Derartig durchhängende Folien führen dazu, daß in der Thermoverformmaschine den einzelnen Formnestern zuviel des Folienmaterials zugeführt wird mit der Folge, daß die hergestellten Verpackungen Falten oder Risse aufweisen, die sie für den Bestimmungszweck ungeeignet machen.

Der Erfindung liegt die Aufgabe zugrunde, eine Kunststoffolie der einleitend genannten Art so auszubilden, daß bei der notwendigen Vorwärmung der Folie für die Herstellung der Verpackung eine solche Zugfestigkeit beibehalten wird, daß ein Durchhang aufgrund des Eigengewichtes der Folie vermieden oder zumindest in solchen Grenzen gehalten wird, daß dieser sich nicht nachteilig auf die Weiterverarbeitung der erwärmten Folie in den Thermoverformmaschinen auswirkt.

Zur Lösung vorstehender Aufgabe kennzeichnet sich die einleitend genannte thermoverformbare, mehrschichtige Kunststoffolie erfindungsgemäß dadurch, daß mit wenigstens einer der beiden Polyolefinschichten eine zweite Polyolefinschicht verbunden ist, welche einen niedrigeren Schmelzindex aufweist als die darunter befindliche Schicht der Polyolefinverbindung.

Überraschenderweise hat es sich gezeigt, daß trotz des niedrigeren Schmelzindexes der wenigstens einseitig aufgebrachten Polyolefinschicht auf die bekannte fünfschichtige Kunststoffolie eine Stabilisierung dieser Folie bei der Erwärmung auf die Verformungstemperatur mit sich bringt und somit eine erhöhte Warmfestigkeit der Kunststoffolie erreicht wird.

Die entweder ein- oder beidseitig auf die bekannte mehrschichtige Kunststoffolie aufgebrachte zweite Polyolefinschicht sollte zweckmäßig eine Zusammensetzung aufweisen, wie sie auch die darunter befindliche Polyolefinverbindung aufweist, mit der die zweite Schicht verbunden ist.

Die zweite Polyolefinschicht kann dabei entweder durch Wärmeeinwirkung, ggf. unter Ausnutzung der Extrudierwärme, unmittelbar auf die bzw. die jeweilige darunter befindliche Schicht der Polyolefinverbindung aufgebracht oder mittels eines Klebers auf der Basis von Isocyanat mit der genannten Schicht der Polyolefinverbindung verbunden werden.

Zweckmäßig ist es, wenn die oder die jeweilige untere Schicht der Polyolefinverbindung einen Schmelzindex (ASTM D-1238 - Condition L) von 1,5 bis 10 g/min bei 230 °C und die oder die jeweilige äußere Schicht der Polyolefinverbindung einen Schmelzindex kleiner als 1,5 g/min bei 230 °C hat.

Die Angabe des Schmelzindexes gemäß dem ASTM-Text D-1238 - Condition L bedeutet, daß die Extrusionsmasse in g/10 min bei der genannten Temperatur der Polyolefinverbindung gemessen wird, die durch eine Mündung mit einem Durchmesser von 0,2095 cm und einer Länge von 0,8 cm in einem « Eigengewicht-Kolbenplastometer » unter dem Gewicht eines Kolbens ermittelt wird, der einen Durchmesser von 0,947 cm hat und zusammen mit dem Stößel 2.160 g wiegt.

Ein Propylen-Blockmischpolymerisat, das im Handel unter der warenzeichenrechtlich geschützten Bezeichnung « BASF 2.300 KX » erhältlich ist und einen Schmelzindex von 4 g/min bei 230 °C hat, erwies sich für die Verwendung der jeweiligen unteren Schicht der Polyolefinverbindung als besonders geeignet.

Ein Polypropylen-Copolymerisat, welches im Handel der Firma Herkules unter der warenzeichenrechtlich geschützten Bezeichnung « PROFAX PD 191 » angeboten wird und einen Schmelzindex von 0,8 g/min bei 230 °C aufweist, zeigte sich für die äußere Schicht der Polyolefinverbindung als besonders geeignet und zweckmäßig.

Die Dicke der äußeren Schicht der Polyolefinverbindung kann zwischen 30 % bis 60 % der Gesamtdicke der Folie betragen und liegt vorzugsweise zwischen 40 und 45 %.

Nachstehend wird ein Beispiel für die Herstellung der erfindungsgemäß ausgebildeten Folie wiedergegeben :

Eine mehrschichtige Folie wurde hergestellt durch Koextrusion und Laminierung von äußeren Schichten eines ersten Polyolefins, das aus Propylen/-Äthylen-Blockmischpolymerisat bestand, welches einen Schmelzindex von 4 dg/min bei 230 °C hat, sowie einer inneren Sperrschicht, bestehend aus 82 Gew.% Vinylidenchlorid und 18 Gew.% Vinylchlorid, Klebstoffschichten, die aus einem Äthylen-Vinylacetat-Copolymer bestehen, welches 28 Gew.% Vinylacetat enthält, und einer zweiten Polyolefinschicht, bestehend aus einem Polypropylen-Homopolymer mit einem Schmelzindex von 0,8 dg/min bei 230 °C in Kontakt mit einer der äußeren Schichten. Die Propylen-Blockpolymerschichten der koextrudierten Folie waren mit 5 Gew.% braunem Pigment eingefärbt und die an einer der äußeren Propylenblock-Copolymerschichten haftete, war mit 4 Gew.% TiO$_2$ pigmentiert. Die äußeren Schichten waren 250 bis 275 μm dick, die innere Sperrschicht war 120 μm dick, die Klebstoffschichten waren je 15 μm dick und die Polypropylenschicht war 500 μm dick.

Das mehrschichtige Koextrudat wurde in schalenförmige Formen überführt, wobei die mit TiO$_2$ pigmentierte Schicht die das Nahrungsmittel berührende Seite der Formen bildete ; hierzu wurden herkömmliche Thermoformanlagen (Illig RDKP 65/1975) verwendet, ohne daß die Folie merklich durchhing, während sie durch die Heizstation lief, in der sie auf Thermoformtemperaturen erwärmt wurde, und dann weiter in die Formstation ; dabei war die Festigkeit der erwärmten Folie ausreichend, um den mittleren Bereich der Folie abzustützen.

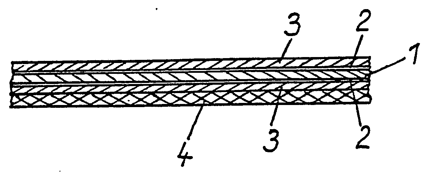

Die Zeichnung gibt in schematischer Darstellung ein Schnittbild durch die erfindungsgemäß ausgebildete thermoverformbare, mehrschichtige Kunststoffolie in vergrößerter Darstellung wieder.

Mit 1 ist die innere Sperrschicht der Folie bezeichnet, welche beispielsweise aus einem extrudierbaren Vinylidenchlorid-Polymer oder Äthylen-Vinyl-Alkohol-Copolymer besteht. Mit dieser inneren Schicht, welche ca. 5 bis 15 % der Gesamtdicke der mehrschichtigen Folie beträgt, sind beidseitig Klebstoffschichten 2, welche in dem dargestellten Beispiel aus einem Copolymer von Äthylen und Vinylacetat bestehen, verbunden, die jeweils durch eine Schicht 3 einer Polyolefinverbindung, beispielsweise aus einem Propylen-Blockmischpolymerisat abgedeckt sind.

Mit der in der Zeichnung unteren Schicht 3 ist eine weitere Schicht 4 einer Polyolefinverbindung, beispielsweise aus einem Polypropylen-Copolymerisat mit einem niedrigeren Schmelzindex als die Schicht 3 verbunden. Die Dicke der Schicht 4 beträgt, bezogen auf die Gesamtdicke der Folie, in dem dargestellten Beispiel etwa 30 %. Die Schichten 3 und 4 können entweder durch Wärmeeinwirkung unmittelbar oder durch Verwendung eines Klebstoffes auf der Basis von Isocyanat vollflächig miteinander fest verbunden sein.

**Patentansprüche**

1. Thermoverformbare, mehrschichtige Kunststoffolie mit Gasabdichteigenschaften, bei der die Folie eine innere extrudierbare Gasabdichtschicht auf der Basis von Vinylidenchlorid oder aus einem Äthylen-Vinyl-Alkohol-Copolymer, eine beidseitig auf die Gasabdichtschicht aufgebrachte Klebstoffschicht aus einem Copolymer von Äthylen und Vinylacetat und jeweils damit verbundene Schichten aus einer Polyolefinverbindung aufweist, dadurch gekennzeichnet, daß mit wenigstens einer der beiden Polyolefinschichten (3) eine zweite Polyolefinschicht (4) verbunden ist, welche einen niedrigeren Schmelzindex aufweist als die darunter befindliche Schicht der Polyolefinverbindung.

2. Folie nach Anspruch 1, dadurch gekennzeichnet, daß die oder die jeweilige untere Schicht der Polyolefinverbindung (3) einen Schmelzindex (ASTM D-1238 - Condition L) von 1,5 bis 10 g/min bei 230 °C und die oder die jeweilige äußere Schicht (4) der Polyolefinverbindung einen Schmelzindex kleiner als 1,5 g/min bei 230 °C hat.

3. Folie nach Anspruch 1 oder 2, dadurch gekennzeichnet, daß die oder jede äußere Polyolefinschicht (4) aus einem Polypropylen-Copolymerisat besteht.

4. Folie nach einem der vorhergehenden Ansprüche, dadurch gekennzeichnet, daß die oder jède äußere Polyolefinschicht (4) 30 bis 60 %, vorzugsweise 40 bis 45 %, der Gesamtdicke der Folie beträgt.

## Claims

1. A thermally deformable, multi-layer plastics foil with gas seal properties, in which the foil has an inner extrudable gas seal layer based on vinylidene chloride or made of an ethylene vinyl alcohol copolymer, an adhesive layer applied to the gas seal layer on both sides and comprising a copolymer of ethylene and vinyl acetate and layers joined respectively thereto and comprising a polyolefin compound, characterised in that a second polyolefin layer (4) is joined to at least one of the two polyolefin layers (3), the said layer (4) having a lower melting index than the layer of the polyolefin compound which is located thereunder.

2. A foil according to claim 1, characterised in that the lower layer or the respective lower layer of the polyolefin compound (3) has a melting index (ASTM D-1238 - Condition L) of 1.5 to 10 g/min. at 230 degrees and the outer or the respective outer layer (4) of the polyolefin compound has a melting index less than 1.5 g/min. at 230 degrees C.

3. A foil according to claim 1 or 2, characterised in that the or each outer polyolefin layer (4) comprises a polypropylene copolymerisate.

4. A foil according to any one of the preceding claims, characterised in that the or each outer polyolefin layer (4) amounts to 30 to 60 per cent, preferably 40 to 45 per cent, of the overall thickness of the foil.

## Revendications

1. Feuille multicouche en matière plastique, déformable à chaud et étanche aux gaz, dans laquelle la feuille comporte une couche intérieure extrudable d'étanchéité aux gaz à base de chlorure de vinylidène ou en un copolymère éthylène-vinyle-alcool, une couche de collage posée des deux côtés sur la couche d'étanchéité aux gaz en un copolymère d'éthylène et d'acétate de vinyle, et des couches liées à chacune d'elles en un composé polyoléfinique, caractérisée par le fait qu'à l'une au moins des deux couches de polyoléfine (3) est liée une seconde couche de polyoléfine (4) qui présente un indice de fusion plus faible que la couche du composé polyoléfinique qui se trouve au-dessous.

2. Feuille selon la revendication 1, caractérisée par le fait que la couche inférieure ou chaque couche inférieure du composé polyoléfinique (3) présente un indice de fusion (ASTM D-1238 - Condition L) de 1,5 à 10 g/mn à 230 °C et que la couche extérieure ou chaque couche extérieure (4) du composé polyoléfinique présente un indice de fusion inférieur à 1,5 g/mn à 230 °C.

3. Feuille selon la revendication 1 ou 2, caractérisée par le fait que la couche extérieure ou chaque couche extérieure (4) de polyoléfine est constituée par un copolymère de polypropylène.

4. Feuille selon l'une des revendications précédentes, caractérisée par le fait que la couche extérieure ou chaque couche extérieure (4) de polyoléfine représente de 30 à 60%, et de préférence de 40 à 45%, de l'épaisseur totale de la feuille.